Europäisches Patentamt

European Patent Office

Office européen des brevets

(11) Veröffentlichungsnummer: **0 267 351**
A1

## (12) EUROPÄISCHE PATENTANMELDUNG

(21) Anmeldenummer: 86890312.1

(22) Anmeldetag: 13.11.86

(51) Int. Cl.⁴: **B23D 43/06**

(43) Veröffentlichungstag der Anmeldung:
18.05.88 Patentblatt 88/20

(84) Benannte Vertragsstaaten:
AT DE FR GB IT

(71) Anmelder: GFM Gesellschaft für
Fertigungstechnik und Maschinenbau
Gesellschaft m.b.H.
Ennserstrasse 14
A-4403 Steyr(AT)

(72) Erfinder: Blaimschein, Gottfried, Dipl.-Ing.
Arnhalmweg 33
A-4407 Steyr(AT)

(74) Vertreter: Hübscher, Gerhard, Dipl.-Ing. et al
Patentanwälte Dipl.-Ing. Gerhard Hübscher
Dipl.-Ing. Helmut Hübscher Dipl.-Ing. Heiner
Hübscher Spittelwiese 7
A-4020 Linz(AT)

(54) **Räumwerkzeug für eine Räummaschine.**

(57) Ein Räumwerkzeug (1a, 1b) für eine Räummaschine besteht aus einem Grundkörper (2a, 2b), der
hintereinandergereihte, zu einem Schneidsatz (4a,
4b) zusammengestellte Schneiden (5a, 5b) aufweist.

Um ein rationell einsetzbares, für eine konstante
Vorschubrichtung geeignetes Räumwerkzeug zu -
schaffen, bildet der Grundkörper (2a, 2b) eine um
eine Mittelachse (M) dreh-und gleichsinnig antreibbare Scheibe und die Schneiden (5a, 5b) eines
Schneidsatzes (4a, 4b) sind entlang eines zu einer
Mittalachse (M) konzentrischen Kreisbogens (3a,
3b) am Scheibenumfang angeordnet.

FIG.1

## Räumwerkzeug für eine Räumaschine

Die Erfindung bezieht sich auf ein Räumwerkzeug für eine Räummaschine, bestehend aus einem Grundkörper, der hintereinandergereihte, zu einem Schneidsatz zusammengestellte Schneiden aufnimmt.

Rundräumen wird bereits als spanendes Fertigungsverfahren zum Erzeugen von rotationssymmetrischen Querschnitten in der Massenproduktion, vor allem zur Bearbeitung von Kurbel-und Nockenwellen eingesetzt, da dieses Rundräumen bei kurzen Bearbeitungszeiten zu hohen Bearbeitungsgenauigkeiten führt. Die Bearbeitung erfolgt durch eine sich aus einer Rotation und einer Translation zusammensetzende Schnittbewegung, wobei die Rotation durch eine Drehung des Werkstückes oder des Räumwerkzeuges und die Translation durch einen Längshub des Räumwerkzeuges zustandekommen. Das Räumwerkzeug besteht aus einem Grundkörper, in dem zu einem ganzen Schneidsatz zusammengestellte Schneiden festgespannt sind und nacheinander zur Vor-und Fertigbearbeitung dienen. Während eines Hubes kommt jede Schneide einmal zur Wirkung und entsprechend dem gewählten Schneidsatz entsteht das gewünschte Profil. Die bekannten Räumwerkzeuge sind allerdings fast durchwegs stangenförmig und erfordern nach dem Arbeitshub, dem eigentlichen Werkzeugvorschub, einen Rückhub, eine Leerbewegung zur Rückkehr in die Ausgangslage. Eine solche hin-und hergehende Werkzeugbewegung verlangt aber einen beträchtlichen Antriebs-und Steueraufwand und außerdem muß die Rückhubzeit als verlorene Nebenzeit in den Bearbeitungsprozeß eingerechnet werden, da erst nach Abschluß des Rückhubes das Räumwerkzeug von einer Bearbeitungsposition in die andere gebracht werden kann und auch ein Werkstückwechsel während des Rückhubes aus Sicherheitsgründen zu vermeiden ist.

Es gibt auch schon Räumwerkzeuge mit am Außenumfang schneidenbestückten kreissektorförmigen Grundkörpern, so daß die lineare Hubbewegung für den Werkzeugvorschub durch ein Hin-und Herschwenken der Kreissektoren ersetzt wird, doch bleiben auch bei diesen Werkzeugen die Nachteile des Wechselspieles zwischen Arbeitshub und Rückhub voll erhalten.

Der Erfindung liegt daher die Aufgabe zugrunde, diese Mängel zu beseitigen und ein Räumwerkzeug der eingangs geschilderten Art zu - schaffen, das sich rationell einsetzen läßt und eine Verkürzung der Nebenzeiten ermöglicht.

Die Erfindung löst diese Aufgabe dadurch, daß der Grundkörper eine Scheibe bildet und die Schneiden eines Schneidsatzes umfangseitig entlang eines zu einer Mittelachse konzentrischen Kreisbogens aufnimmt, wobei die Scheibe um diese Mittelachse dreh-und mit gleichbleibendem Drehsinn antreibbar ist. Bei diesem Räumwerkzeug können die Schneiden durch eine reine Drehbewegung ohne Richtungsumkehr immer wieder zur Wirkung gebracht werden und ein zum Arbeitshub gegensinniger Rückhub ist unnötig. Es vereinfachen sich der Vorschubantrieb und dessen Steuerung und vor allem lassen sich die Nebenzeiten herabsetzen, insbesondere dann, wenn die Schneiden am Scheibenumfang nicht nur zu einem, sondern zu mehreren Schneidsätzen zusammengefaßt sind und das Werkzeug daher nicht erst nach einer vollen Umdrehung, sondern bereits nach Teilumdrehungen immer wieder einsatzbereit ist. Darüber hinaus bringt der scheibenförmige Grundkörper durch seine Ausgewogenheit kaum Unwuchtschwierigkeiten mit sich, was vor allem für ein Rundräumen bei stillstehendem Werkstück und umlaufendem Räumwerkzeug von Bedeutung ist. Ein scheibenförmiger Grundkörper kann außerdem gut gelagert und abgestützt werden und ist vergleichsweise einfach durch einen Drehantrieb mit gleichbleibender Drehrichtung den erforderlichen Arbeitshub-und Rückhubbewegungen zu unterwerfen, die ja hier als gleichbleibende Drehbewegungen aneinanderschließen.

Ist erfindungsgemäß eine Vollscheibe mit am Außenumfang sitzenden Schneiden vorgesehen, wobei die Schneiden wenigstens zwei zentralsymmetrisch angeordneten Schneidsätzen zugehören und die Vollscheibe jeweils zwischen den Schneidsätzen eine Umfangsausnehmung aufweist, entsteht ein rationell herstellbares Werkzeug, das sich auch in vorteilhafter Weise paar-oder gruppenweise einsetzen läßt. Die Umfangsausnehmungen ergeben jeweils einen entsprechend großen Freiraum, der an die zu bearbeitenden Werkstücke angepaßt sein wird und eine einfache Positionierung der Werkzeuge bzw. die Relativbewegung zwischen Werkstück und Werkzeugen ermöglicht. Die Anordnung mehrerer Schneidsätze pro Werkzeug führt zu einer symmetrischen Werkzeugausgestaltung und verkürzt die Nebenzeit zwischen Einsatzende des einen Schneidsatzes und der Einsatzbereitschaft des nächsten Schneidsatzes. Außerdem wird durch die Mehrfachbestükkung des Werkzeuges die Standzeit entsprechend erhöht, da eben nicht immer der gleiche Schneidsatz, sondern ein Schneidsatz nach dem anderen zur Wirkung kommt.

Erfindungsgemäß kann auch eine Ringscheibe mit am Innenumfang sitzenden Schneiden vorgesehen sein, wobei sich der Innenumfang aus einem Kreisbogen für die einem Schneidsatz zugehörenden Schneiden und einer demgegenüber erweiterten, vorzugsweise exzentrischen Ausbuchtung der Rindscheibe zusammensetzt. Ein solches innenschneidendes Räumwerkzeug ergibt Vorteile hinsichtlich der Lagerung und des Antriebes und auch hinsichtlich der beim Rundräumen, bedingt durch die Kinematik, in Kauf zu nehmenden Schneidwinkeländerung, doch muß das Werkzeug das Werkstück umschließen und mit seiner Mittelachse gegenüber der Achse des zu bearbeitenden Querschnittes exzentrisch positioniert werden, so daß des Bau-und Konstruktionsaufwandes und des Platzbedarfes wegen eine einfache Bestückung, also nur ein einziger Schneidsatz Verwendung finden wird. Auch hier ergibt sich durch die Ausbuchtung der erforderliche Freiraum innerhalb der Ringscheibe, um für den Werkstückwechsel und/oder das Positionieren des Werkzeuges eine axiale Relativbewegung zwischen Werkstück und Werkzeug zu ermöglichen.

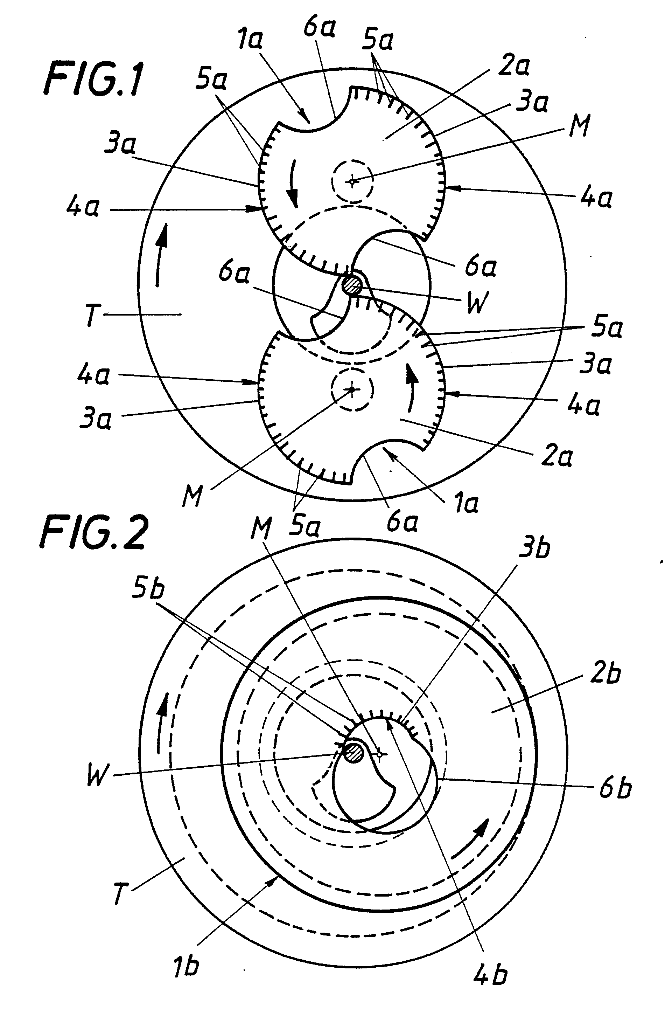

In der Zeichnung ist der Erfindungsgegenstand rein schematisch veranschaulicht, und zwar zeigen Fig. 1 und 2 zwei Ausführungsbeispiele eines erfindungsgemäßen Räumwerkzeuges in Ansicht.

Die dargestellten Räumwerkzeuge 1a, 1b bestehen aus einem scheibenförmigen Grundkörper 2a, 2b, an dessen Umfang entlang eines zur Mittelachse M konzentrischen Kreisbogens 3a, 3b zu einem Schneidsatz 4a, 4b zusammengestellte Schneiden 5a, 5b sitzen. Das Räumwerkzeug 1a, 1b ist um die Mittelachse M des Grundkörpers 2a, 2b drehbar in einem Werkzeugträger einer nicht weiter dargestellten Räummaschine, beispielsweise stirnseitig in einer Werkzeugtrommel T, gelagert und über einen ebenfalls nicht weiter dargestellten Antrieb, beispielsweise einen Überlagerungstrieb, mit gleichbleibendem Drehsinn antreibbar. Dieses Räumwerkzeug 1a, 1b läßt sich durch eine reine Drehbewegung dem erforderlichen Vorschub unterwerfen und bringt ohne eine Richtungsumkehr immer wieder seine Schneidsätze 4a ordnungsgemäß zur Wirkung. In Kombination mit einer zusätzlichen, die eigentliche Schnittbewegung ausführenden Relativdrehung des Werkstückes W kommt es daher ohne jede Richtungsumkehr zu einem gewünschten Rundräumen, wobei die Relativdrehung, also die eigentliche Schnittbewegung, durch eine Werkstückdrehung oder bei stehendem Werkstück W durch umlaufende Werkzeuge erreicht werden kann. Ein solches Umlaufen der Werkzeuge 1a, 1b bei gleichzeitiger Vorschubbewegung ergibt sich, wie in der Zeichnung angedeutet, durch die Lagerung der Räumwerkzeuge 1a, 1b in einer Werkzeugtrommel T, die das Werkstück W umschließt und selbst dreh-und antreibbar gelagert ist.

Gemäß dem Ausführungsbeispiel nach Fig. 1 bildet der Grundkörper 2a eine Vollscheibe und die Schneiden 5a sitzen am Außenumfang. Es sind zwei zentralsymmetrisch angeordnete Schneidsätze 4a vorgesehen, die voneinander durch Umfangsausnehmungen 6a getrennt sind. Die Werkzeugtrommel T nimmt zwei paarweise zusammenwirkende Werkzeuge 1a auf, wobei die Schneidsätze 4a der Werkzeuge 1a jeweils gleichzeitig zum Einsatz kommen und sich anschließend an die Schneidsätze die Umfangsausnehmungen 6a gegenüberliegen, so daß nach jedem Arbeitsschritt zwischen den Werkzeugen 1a genügend Platz für ein Positionieren oder ein Werkstückwechseln bleibt. Die Werkzeuge 1a werden synchron angetrieben und ohne Rückhub kommt es nach jedem Einsatz eines Schneidsatzes 4a aufgrund der anschließenden Aussparungen 6a sofort zu einer Positionierstellung und durch Weiterdrehen in gleicher Richtung zu einer neuen Einsatzmöglichkeit der Schneidsatz.

Gemäß dem Ausführungsbeispiel nach Fig. 2 gibt es eine Ringscheibe 2b als Grundkörper mit am Innenumfang sitzenden Schneiden 5b, wobei sich dieser Innenumfang aus dem den Schneidsatz 4b aufnehmenden Kreisbogen 3b und einer demgegenüber erweiterten exzentrischen Ausbuchtung 6b zusammensetzt. Es ist nur ein Schneidsatz 5b vorgesehen, doch wird auch hier durch eine ganze Werkzeug drehung zwischen zwei Arbeitsschritten eine Drehrichtungsumkehr und ein Rückhub vermieden. Während die Werkzeugtrommel T umläuft und bei stehendem Werkstück W die Schnittbewegung ausführt, dreht sich exzentrisch zur Werkzeugtrommel T das Werkstück 1b um einen dem Kreisbogen 3b des Schneidsatzes 4b entsprechenden Drehwinkel und sorgt dadurch für den erforderlichen Vorschub für die schneiden 5b des Schneidsatzes 4b, worauf anschließend die Ausbuchtung 6b das Werkstück W freigibt, das nach einem geeigneten Ausrichten der Werkzeugtrommel T in bezug auf die Werkstückkontur relativ zum Werkzeug 1b für ein Positionieren oder ein Werkstückwechseln axial durch das Werkzeug 1b hindurchbewegt werden kann.

Das erfindungsgemäße Räumwerkzeug 1a, 1b zeichnet sich durch seine einfache Bauweise und durch seine rationelle Einsatzmöglichkeit aus, wobei mit einer gleichbleibenden Vorschubrichtung gearbeitet werden kann und größere Nebenzeiten durch Rückhubbewegungen und aufwendige Steuerungen und Antriebe für Drehbewegungen vermeidbar sind.

**Ansprüche**

1. Räumwerkzeug für eine Räummaschine, bestehend aus einem Grundkörper (2a, 2b), der hintereinandergereihte, zu einem Schneidsatz (4a, 4b) zusammengestellte Schneiden (5a, 5b) aufnimmt, dadurch gekennzeichnet, daß der Grundkörper (2a, 2b) eine Scheibe bildet und die Schneiden (5a, 5b) eines Schneidsatzes (4a, 4b) umfangseitig entlang eines zu einer Mittelachse (M) konzentrischen Kreisbogens (3a, 3b) aufnimmt, wobei die Scheibe (2a, 2b) um diese Mittelachse (M) dreh-und mit gleichbleibendem Drehsinn antreibbar ist.

2. Räumwerkzeug nach Anspruch 1, dadurch gekennzeichnet, daß eine Vollscheibe (2a) mit am Außenumfang sitzenden Schneiden (5a) vorgesehen ist, wobei die Schneiden (5a) wenigstens zwei zentralsymmetrisch angeordneten Schneidsätzen (4a) zugehören und die Vollscheibe (2a) jeweils zwischen den Schneidsätzen (4a) eine Umfangsausnehmung (6a) aufweist.

3. Räumwerkzeug nach Anspruch 1, dadurch gekennzeichnet, daß eine Ringscheibe (2b) mit am Innenumfang sitzenden Schneiden (5b) vorgesehen ist, wobei sich der Innenumfang aus einem Kreisbogen (3b) für die einem Schneidsatz (4b) zugehörenden Schneiden (5b) und einer demgegenüber erweiterten, vorzugsweise exzentrischen Ausbuchtung (6b) der Ringscheibe (2b) zusammensetzt.

FIG.1

FIG.2

**Europäisches Patentamt**

# EUROPÄISCHER RECHERCHENBERICHT

Nummer der Anmeldung

EP 86 89 0312

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 090 119 (GROENE et al.) <br> * Anspruch 1; Seite 2, rechte Spalte, zeilen 40-44; Figur 6 * | 1 | B 23 D 43/06 |
| A | US-A-2 468 745 (GARAND) <br> * Spalte 1, zeilen 27-34; Anspruch 1; Figur 1 * | 1 | |
| A | US-A-1 579 888 (RASZL) <br> * Seite 1, Zeilen 100-108; Seite 2, Zeilen 27-46; Figuren 1, 4 * | 1,2 | |
| A | SOVIET INVENTIONS ILLUSTRATED, Sektion Mechanik, Woche D17, 3. Juni 1981, Zusammenfassungsnr. D8142 P54, Derwent Publications Ltd., London, GB; & SU - A - 755 463 (MOSCOW LIKHACHEV) 25.08.1980 | 1 | |

| RECHERCHIERTE SACHGEBIETE (Int. Cl.4) |
|---|
| B 23 B 5/18 <br> B 23 D 37/00 <br> B 23 D 43/00 <br> B 23 F 21/00 |

| Kategorie | Kennzeichnung | Betrifft Anspruch | |
|---|---|---|---|
| A | MASCHINENMARKT, Jahrgang 92, Nr. 34, August 1986, Seiten 24-28, Würzburg; MÜLLER et al.: "Zeropankraft kompensieren" * Seite 28, Bild 8 * | 1 | |

--- -/-

Der vorliegende Recherchenbericht wurde für alle Patentansprüche erstellt.

| Recherchenort | Abschlußdatum der Recherche | Prüfer |
|---|---|---|
| BERLIN | 19-06-1987 | MARTIN A E W |

# EUROPÄISCHER RECHERCHENBERICHT

Europäisches Patentamt

Nummer der Anmeldung

EP 86 89 0312

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | WERKSTATT UND BETRIEB, Jahrgang 119, Nr. 7, Juli 1986, Seiten 563-566, München; E. ANSCHÜTZ et al.: "Drehräumen, ein fortschrittliches Fertigungsverfahren" * Seite 564, Bild 2 * | 1 | |
| A | US-A-2 126 462 (GROENE et al.) * Ansprüche 1, 2; Figur 2 * | 3 | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| BERLIN | 19-06-1987 | MARTIN A E W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82